(19) **Europäisches Patentamt / European Patent Office / Office européen des brevets**

(11) **EP 1 292 048 B1**

(12) **EUROPÄISCHE PATENTSCHRIFT**

(45) Veröffentlichungstag und Bekanntmachung des Hinweises auf die Patenterteilung:
**11.03.2009  Patentblatt 2009/11**

(21) Anmeldenummer: **01121488.9**

(22) Anmeldetag: **07.09.2001**

(51) Int Cl.:
*H04B 7/06* (2006.01)    *H04J 11/00* (2006.01)

(54) **Verfahren zur Sendemehrwegeübertragung von Daten in einem Funk-Kommunikationssystem**

Data transmission diversity method in a radio communication system

Procédé de transmission de données en diversité dans un système de communication radio

(84) Benannte Vertragsstaaten:
**DE ES FR GB IT**

(43) Veröffentlichungstag der Anmeldung:
**12.03.2003  Patentblatt 2003/11**

(73) Patentinhaber: **Nokia Siemens Networks GmbH & Co. KG**
**81541 München (DE)**

(72) Erfinder: **Purat, Marcus, Dr.**
**12209 Berlin (DE)**

(56) Entgegenhaltungen:
**WO-A-00/38462      WO-A-00/62444**
**WO-A-01/01605      US-A- 5 652 764**
**US-B1- 6 173 005**

EP 1 292 048 B1

**Beschreibung**

Die Erfindung betrifft ein Verfahren zur Sendemehrwegeübertragung (TxDiversity oder Transmit Diversity) von identischen Daten über mehrere Antennen über $2^L$ physikalische Kanäle mit der natürlichen Zahl L in einem Funk-Kommunikationssystem - insbesondere in einem Mobilfunk-Kommunikationssystem - mit mindestens jeweils einer über eine Funkschnittstelle verbundenen Basisstation und Teilnehmerstation gemäß dem Oberbegriff des Anspruches 1.

Die Erfindung betrifft außerdem eine Sendestation (insbesondere eine Basisstation als Sendestation), eine Empfangsstation (insbesondere eine Teilnehmerstation als Empfangsstation), sowie ein Funk-Kommunikationssystem, welche zur Durchführung des Verfahrens benutzt werden können.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit TD/CDMA-Übertragungsverfahren bzw. FD/CDMA-Übertragungsverfahren über die Funkschnittstelle, wie beispielsweise das UMTS (Universal Mobile Telecommunication System) oder andere Systeme der dritten Generation sind Frequenzen im Frequenzband von ca. 2000 MHz vorgesehen.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

Für das UMTS-Mobilfunksystem wurden ein schmalbandiges und ein breitbandiges TD-CDMA, nämlich ein Vielfachzugriffkonzept basierend auf Zeit-, Frequenz- und Codemultiplex-Konzept, als Übertragungsverfahren für die TDD-Komponente des Konzeptes ausgewählt. Beispielsweise umfasst das breitbandige TDD-Übertragungsverfahren (Time Division Duplex) bei UMTS einen TDMA-Rahmen mit einer Dauer von 10 ms, der in 15 Zeitschlitze mit einer Dauer von ca. 666 μs unterteilt ist, so dass 15 Zeitschlitze pro Rahmen zur Verfügung stehen. Die Zeitschlitze werden aufgeteilt in Zeitschlitze für die Aufwärts- und die Abwärtsverbindung. Der Umschaltpunkt zwischen der Aufwärts- und der Abwärtsverbindung in dem TDD-Rahmen kann verschoben werden, um einen asymmetrischen Verkehr zu unterstützen.

Innerhalb jeden Zeitschlitzes der Länge von ca. 666 μs wird eine zusätzliche Trennung der Benutzersignale durch Spreizcodes entsprechend dem Vielfachzugriff basierend auf dem Codemultiplex-Konzept (Code Division Multiple Access - CDMA) bewirkt. Dies bedeutet, dass innerhalb eines Zeitschlitzes mehr als ein Funkblock (burst) einer entsprechenden Länge übertragen werden kann. Diese mehreren Funkblöcke innerhalb des gleichen Zeitschlitzes können sowohl verschiedenen Benutzern als auch teilweise oder insgesamt einem einzigem Benutzer zugeordnet sein. Für die vielfachen Funkblöcke innerhalb des gleichen Zeitschlitzes werden verschiedene Spreizcodes verwendet, um die Unterscheidung zwischen den verschiedenen Funkblöcken zu ermöglichen.

Verfahren zur Sendemehrwegeübertragung (TxDiversity bzw. Transmit Diversity) von identischen Daten über mehrere Antennen über $2^L$ physikalische Kanäle mit der natürlichen Zahl L in einem Funk-Kommunikationssystem mit mindestens jeweils einer über eine Funkschnittstelle miteinander verbundenen Basisstation und Teilnehmerstation, wobei die Übertragung mittels des CDMA-Vielfachzugriffsverfahrens erfolgt und wobei den physikalischen Kanälen orthogonale Codes mit variablen Spreizfaktoren der OVSF-Baumstruktur zugeordnet werden, sind grundsätzlich bekannt.

Die OVSF-Baumstruktur der variablen Spreizfaktoren ist beispielsweise in:

B. Walke, "Mobilfunknetze und ihre Protokolle", Band 1, Kapitel 5.8.5.1, 2. überarbeitete und erweiterte Auflage, 2000, B.G. Teubner GmbH, [1]

beschrieben.

Der aktuelle UTRA TDD Standard (UMTS Terrestrial Radio Access) definiert für beide Chip-Raten-Moden (high chip rate und low chip rate) eine Mehrwegeübertragung (TxDiversity) für den als Broadcast Channel (BCH) bezeichneten Signalisierungskanal. Diese Lösung wird als Block-STTD (STTD: Space Time Transmit Diversity) bezeichnet. Dies ist beispielsweise aus den Standardspezifikationen:

3GPP specification TS25.221 version 4.1.0 [2]

und

3GPP specification TS25.224 version 4.1.0 [3]

zu entnehmen.

Die folgenden Betrachtungen sind der Einfachheit und besseren Verständlichkeit wegen auf eine Mehrwegeübertragung (TxDiversity) für den als Broadcast Channel (BCH) bezeichneten Signalisierungskanal zum UTRA TDD Modus bezogen.

Im Fall des UTRA TDD Modus ist eine Mehrwegeübertragung über 2 physikalische Kanäle vorgesehen. Bei den folgenden Betrachtungen wird diese Vorgabe zugrunde gelegt.

Wenn Joint Detection (JD) im Empfänger angewandt wird, benötigt diese Lösung eine separate Empfängerstruktur für den dem Broadcast Channel (BCH) zugeordneten Zeitschlitz. Dies liegt in der Tatsache begründet, dass das spezielle STDD decoding vollkommen unterschiedliche Operationen erforderlich macht im Bezug zum konventionellen JD-Empfänger, der für die anderen Zeitschlitze benutzt werden kann. Dies ist beispielsweise beschrieben in:

> 3GPP TSG RAN 1 temporary document R1-99-G38,TI, Motorola, "Transmit Diversity scheme for broadcast channels of the TDD mode" [4].

Um eigene Empfängerstrukturen für einen einzigen Zeitschlitz zu vermeiden, werden derzeit verschiedene TxDiversity-Lösungen diskutiert.

Ein Vorschlag umfasst weiterhin ein STTD encoding (STTD: Space Time Transmit Diversity) für die Daten, allerdings werden die codierten Daten (encoded data) mittels eines eigenen Spreizcodes übertragen. Weil für den BCH-Zeitschlitz eine Zuordnung von Trainingssequenzen (Mittambeln) zu den Codes notwendig ist und weil die BCH-Mittambel m ohnehin zu zwei Codes c(1) und c(2) zugeordnet ist, ist der separate Spreizcode c(2) ein nicht für andere Kanäle zu verwendender Code. Dies führt dazu, dass dieser Vorschlag (als STTD-2 bezeichnet) im Vergleich zu der derzeit standardisierten Lösung zu keiner Limitierung an Codes führt. Bei STTD-2 kann derselbe Empfänger auch für die anderen Zeitschlitze benutzt werden, weil die STTD codierten Daten als ein separates Datensignal gesehen werden können. Zur Fehlerkorrektur können die empfangenen Daten nach dem Detektor einem soft combining unterzogen werden.

Wenn wie oben beschrieben derselbe Empfänger auch für die anderen Zeitschlitze benutzt wird, führt dies zu einer erhöhten Rechenkomplexität, weil 2 Codes unabhängig voneinander detektiert werden müssen, ohne dass die spezielle Struktur der übermittelten Daten im Detektor bereits ausgenutzt wird. Darüber hinaus wird die Detektorgüte verringert. Um jedoch ein Ansteigen der rechnerischen Komplexität zu vermeiden und die Leistung des Detektors zu verbessern, muss wieder ein Algorithmus implementiert werden, wie er in [4] beschrieben ist. Dies führt allerdings zu einer erhöhten Aufwand beim Hardware-Design.

Da das STTD encoding nur dazu dient, dass derselbe Spreizcode sowohl für die originale Antenne als auch für die aufgrund der Mehrwegeübertragung vorhandenen zusätzlichen Antenne gebraucht werden kann, kann auch auf das STTD encoding verzichtet werden.

Wenn ohnehin aber zwei Spreizcodes benutzt werden, wäre als einfachere Lösung denkbar, lediglich dieselben Daten über verschiedene Spreizcodes auf 2 Antennen zu übertragen. Die Performanz mit oder ohne STTD encoding würde dieselbe sein, weil die Zeitdiversität bereits durch die Bitverwürfelung (Interleaving) und die Codierung erfolgt.

Eine simple Wiederholung der Daten über 2 Codes erlaubt in Verbindung mit einem soft combining auch denselben Empfänger wie für die anderen Zeitschlitze zu benutzen. Allerdings ermöglicht das darüber hinaus auch eine einfachere Optimierung im Hinblick auf einen Empfänger mit weniger Rechenaufwand.

Als Gleichung der linearen Algebra kann die konventionelle gespreizte Übertragung eines Datensymbols d über einen Kanal dargestellt werden durch

$$\mathbf{x}_n = \mathbf{H}_1 \cdot \mathbf{c}_Q^{(k)} \cdot d = \mathbf{b} \cdot d \, ,$$

wobei $x_n$ für das empfangene Chipsignal steht, d für das n-te Datensymbol, $c^{(k)}_Q$ für den Codevektor, der den Spreizcode $c_k$ mit dem Spreizfaktor Q hat und $H_1$ für die Kanalmatrix für die Impulsantwort $h_1$.

Mit demselben Datensymbol d, aber über 2 Codes und 2 Kanäle übertragen, kann die Übertragung dargestellt werden durch die Gleichung

$$\mathbf{x}_n = \left( \mathbf{H}_1 \cdot \mathbf{c}_Q^{(k)} + \mathbf{H}_2 \cdot \mathbf{c}_Q^{(j)} \right) \cdot d = \mathbf{b}' \cdot d \, .$$

Auf diese Weise wird das gleiche Modell benutzt mit und ohne Mehrwegeübertragung (TxDiversity). Der einzige Unterschied besteht zwischen den kombinierten Kanal-Code-Matrizen. Dies wäre nicht der Fall bei STTD-2, wo verschiedene Daten auf Codes gemäß STTD Encoding übertragen werden.

Weil die Algorithmen zur Joint Detection auf diesen Kanalcode-Matrizen beruhen, was beispielsweise aus:

M. Vollmer, M. Haardt, J. Götze, "Comparative Study of Joint Detection Techniques for TD-CDMA based Mobile Radio Systems, submitted for publication to IEEE JSAC [5]

bekannt ist, kann derselbe Algorithmus für den Fall einer Mehrwegeübertragung und für den Fall ohne Mehrwegeübertragung verwendet werden. Lediglich die Parameter müssen verändert werden und die Berechnung erfolgt unterschiedlich.

Weil 2 Codes und 2 Kanäle für den Mehrwegeübertragungsfall berücksichtigt werden müssen, scheint der Rechenaufwand für die Kanalcode-Matrix in diesem Fall doppelt so groß zu sein. Dies ist insbesondere unvorteilhaft, wenn das empfangene Signal mit der Kanal-Code-Matrix gefaltet werden muss (matched filter, wie bei Cholesky-JD, siehe [5]), da der Aufwand für die matched filter Operation verdoppelt ist. Dies macht einen Großteil des insgesamt aufzuwendenden Rechenaufwands aus.

Aus US 5,652,764 ist ein Verfahren zur Datenübertragung bekannt. Dabei werden zu sendende Daten in zwei Zweigen durch jeweilige orthogonale Codes gespreizt. Die gespreizten Daten werden dann über den Zweigen jeweils zugeordnete Antennen an einen Sender funkübertragen.

Der Erfindung liegt die Aufgabe zugrunde, ein verbessertes Verfahren der eingangs genannten Art aufzuzeigen. Insbesondere sollte dabei der notwendige Rechenaufwand möglichst verringert werden.

Diese Aufgabe wird für das Verfahren durch die Merkmale des Anspruchs 1 bzw. 8 gelöst.

Vorteilhafte Ausgestaltungen und Weiterbildungen sind Gegenstand der abhängigen Ansprüche.

Die Funkstationen und das Funk-Kommunikationssystem nach der Erfindung können entsprechend den unten für das Verfahren vorgestellten Ausgestaltungen und Weiterbildungen ausgebildet sein.

Erfindungsgemäß werden den physikalischen Kanälen von demselben Muttercode abgeleitete Codes zugeordnet, wobei der Muttercode einen Spreizfaktor größer als 1 hat. Durch diese Maßnahme sind Verbesserungen zu erzielen, insbesondere kann der empfängerseitige Rechenaufwand verringert werden.

Insbesondere können den physikalischen Kanälen $2^L$ parallele Codes des Spreizfaktors Q zugeordnet werden, d.h. der Muttercode weist einen Spreizfaktor $Q/2^L$ auf.

Die Erfindung nutzt dabei aus, dass die Kanalverzögerung der physikalischen Kanäle vergleichbar sind, d.h. im wesentlichen nicht voneinander abweichen. Anhand von Analysen kann beispielsweise gezeigt werden, dass im Falle des Einsatzes von 2 Antennen für die Mehrwegeübertragung in 99% der Zeit die Verzögerung von den Antennen zur Empfangsstation kleiner ist als ein Achtel der Chipzeit (Tc/8).

Bei der Sendemehrwegeübertragung ist die Anzahl der Antennen identisch mit der Anzahl $2^L$ der physikalische Kanäle.

Die Erfindung und ihre wesentlichen Vorteile werden im Folgenden anhand eines Beispiels zum UTRA TDD Modus erläutert.

Dabei wird im wesentlichen auf die in [5] verwendete Nomenklatur zurückgegriffen.

Unter der Annahme, dass $H_1$ die (Q+W-1 x Q) Matrix für den Pfad der ersten Antenne und $H_2$ die (Q+W-1 x Q) Matrix für den Pfad der zweiten Antenne ist, und lediglich P zu betrachtende Pfade $h_1,...,h_P$ innerhalb des Kanalschätzungsfensters der Größe W in Betracht gezogen werden müssen, ergeben sich folgende Kanalmatrizen:

$$\mathbf{H}_1 = \begin{pmatrix} 0 & 0 & 0 \\ \vdots & \ddots & 0 \\ h_1^{(1)} & & 0 \\ \vdots & \ddots & \vdots \\ h_1^{(2)} & & h_1^{(1)} \\ \vdots & \ddots & \vdots \\ h_1^{(P)} & & h_1^{(2)} \\ \vdots & \ddots & \vdots \\ 0 & & h_1^{(P)} \\ 0 & 0 & \vdots \\ 0 & 0 & 0 \end{pmatrix} \qquad \mathbf{H}_2 = \begin{pmatrix} 0 & 0 & 0 \\ \vdots & \ddots & 0 \\ h_2^{(1)} & & 0 \\ \vdots & \ddots & \vdots \\ h_2^{(2)} & & h_2^{(1)} \\ \vdots & \ddots & \vdots \\ h_2^{(P)} & & h_2^{(2)} \\ \vdots & \ddots & \vdots \\ 0 & & h_2^{(P)} \\ 0 & 0 & \vdots \\ 0 & 0 & 0 \end{pmatrix} .$$

und

Diese Matrizen sind unter der oben erwähnten Annahme konstruiert, dass dieselbe Ausbreitungsverzögerung bei beiden Antennen vorliegt.

Die Übertragung des n-ten Datensymbols d gespreizt mit dem Spreizcode $c^{(k)}_Q$ über den Kanal $h_1$ wird zu einem Empfangssignal $x_n$ nach der Gleichung

$$\mathbf{x}_n = \mathbf{H}_1 \cdot \mathbf{c}_Q^{(k)} \cdot d = \mathbf{b} \cdot d$$

führen. Mit der Mehrwegeübertragung (TxDiversity), d.h. in dem zu betrachtenden Fall mit 2 Übertragungspfaden $h_1$ und $h_2$, und bei einer Übertragung desselben Symbols über 2 Codes, wird das empfangene Signal $x_n$ lauten:

$$\mathbf{x}_n = \left( \mathbf{H}_1 \cdot \mathbf{c}_Q^{(k)} + \mathbf{H}_2 \cdot \mathbf{c}_Q^{(j)} \right) \cdot d = \mathbf{b'} \cdot d$$

Gemäß [5] beruhen die JD-Algorithmen auf 2 gemeinsamen Vorbereitungsoperationen, nämlich der Operation der Korrelationsmatrix S mit

$$\mathbf{S} = \mathbf{T}^H \cdot \mathbf{T}$$

und der Matched-Filter-Operation mit

$$\mathbf{y} = \mathbf{T}^H \cdot \mathbf{x} .$$

Dabei steht x für das vollständige Empfangssignal. Die Matrix T beinhaltet die Kanal-Code-Vektoren b in einem spezifischen Muster.

Wenn nun erfindungsgemäß der erste und der zweite BCH-Code so ausgewählt werden, dass sie von demselben Muttercode abgeleitet sind, kann der Rechenaufwand verringert werden, weil einerseits die Berechnung der Gesamtimpulsantwort b' vereinfacht wird und andererseits die Berechnung der Matched-Filter-Funktion b' x vereinfacht wird.

Mit Vorteil weist jeder Code eine Länge Q auf und wird aus $2^L$ Kurzcodes der Länge $Q/2^L$ zusammengesetzt.

Der Vektor b' kann in diesem Fall als Funktion

$$\mathbf{b'} = \left(\mathbf{H}_1 \cdot \mathbf{c}_Q^{(1)} + \mathbf{H}_2 \cdot \mathbf{c}_Q^{(2)} + \ldots + \mathbf{H}_{2^k} \cdot \mathbf{c}_Q^{(2^k)}\right)$$

$$= \mathbf{H}_1' \cdot \mathbf{c}_{Q/2^k}^{(1)} + \mathbf{H}_2' \cdot \mathbf{c}_{Q/2^k}^{(2)} + \ldots + \mathbf{H}_{2^k}' \cdot \mathbf{c}_{Q/2^k}^{(2^k)}$$

dargestellt werden, wobei $H_x$ für die Kanalmatrix zur Impulsantwort $h_x$ und $C_Q^{(x)}$ für den Spreizcode für Kanal x der Ebene Q der OVSF-Baumstruktur stehen.

Wenn im Beispiel des UTRA TDD Modus der erste und zweite BCH-Code als

$$\mathbf{c}_Q^{(1)} = \left(c_1^{(1)} \quad c_2^{(1)} \quad \cdots \quad c_Q^{(1)}\right)^T \quad \text{und} \quad \mathbf{c}_Q^{(2)} = \left(c_1^{(2)} \quad c_2^{(2)} \quad \cdots \quad c_Q^{(2)}\right)^T$$

dargestellt werden, können sie aufgrund der speziellen Struktur der OVSF-Codes und aufgrund der erfindungsgemäßen Ableitung vom selben Muttercode in 2 Kurzcodes jeweils mit einer Länge von Q/2 Chips, nämlich

$$\mathbf{c}_{Q/2}^{(1)} = \left(c_1^{(1)} \quad c_2^{(1)} \quad \cdots \quad c_{Q/2}^{(1)} \, 0 \quad \cdots \quad 0\right)^T$$

und

$$\mathbf{c}_{Q/2}^{(2)} = \left(0 \quad \cdots \quad 0 \quad c_1^{(1)} \, c_2^{(1)} \quad \cdots \quad c_{Q/2}^{(1)}\right)^T$$

zerlegt werden:

$$\mathbf{c}_Q^{(1)} = \mathbf{c}_{Q/2}^{(1)} + \mathbf{c}_{Q/2}^{(2)}$$

und

$$\mathbf{c}_Q^{(2)} = \mathbf{c}_{Q/2}^{(1)} - \mathbf{c}_{Q/2}^{(2)}$$

Damit kann die Berechnung der Gesamtimpulsantwort b' folgendermaßen vereinfacht werden:

$$\mathbf{b'} = \left(\mathbf{H}_1 \cdot \mathbf{c}_Q^{(1)} + \mathbf{H}_2 \cdot \mathbf{c}_Q^{(2)}\right)$$

$$= \left(\mathbf{H}_1 \cdot \mathbf{c}_{Q/2}^{(1)} + \mathbf{H}_1 \cdot \mathbf{c}_{Q/2}^{(2)} + \mathbf{H}_2 \cdot \mathbf{c}_{Q/2}^{(1)} - \mathbf{H}_2 \cdot \mathbf{c}_{Q/2}^{(2)}\right)$$

$$= \left(\mathbf{H}_1 + \mathbf{H}_2\right) \cdot \mathbf{c}_{Q/2}^{(1)} + \left(\mathbf{H}_1 - \mathbf{H}_2\right) \cdot \mathbf{c}_{Q/2}^{(2)}$$

$$= \mathbf{H}_1' \cdot \mathbf{c}_{Q/2}^{(1)} + \mathbf{H}_2' \cdot \mathbf{c}_{Q/2}^{(2)}$$

Da die Kanalmatrizen $H_1$ und $H_2$ ihre Elemente an denselben Positionen haben, weisen die neuen Kanalmatrizen $H'_1$ und $H'_2$ dieselbe Anzahl von Elementen auf wie die Kanalmatrizen $H_1$ und $H_2$. Weil aber die Codes lediglich die halbe Länge beinhalten, ist die Zahl der Rechenoperationen für b' bis auf Ausnahme, dass die zusätzliche Addition berücksichtigt werden muss, identisch mit der für die Berechnung von b.

Vergleichbares gilt für die Matched-Filter-Operation. Statt der Berechnung von

$$\mathbf{y} = \mathbf{b}^H \cdot \mathbf{x} = \mathbf{H}_1 \cdot \mathbf{c}_Q^{(1)} \cdot \mathbf{x}$$

für den Fall einer Übertragung ohne Mehrwegediversität wird nun für den Fall der Mehrwegeübertragung die Matched-Filterfunktion y berechnet nach der Gleichung:

$$\mathbf{y} = \mathbf{b'}^H \cdot \mathbf{x} = \left(\mathbf{H}_1' \cdot \mathbf{c}_{Q/2}^{(1)} + \mathbf{H}_2' \cdot \mathbf{c}_{Q/2}^{(2)}\right) \cdot \mathbf{x}$$

Es ist unter ähnlichen Betrachtungen wie oben für die Gesamtimpulsantwort b' leicht zu erkennen, dass die Zahl der Rechenoperationen wegen der zusätzlichen Additionen nur in geringem Maße erhöht ist.

In der allgemeinsten Form des oben angegeben Verfahrens werden der erste und zweite BCH-Code 9

$$\mathbf{c}_Q^{(1)} = \left(c_1^{(1)} \quad c_2^{(1)} \quad \cdots \quad c_Q^{(1)}\right)^T \qquad \text{und} \qquad \mathbf{c}_Q^{(2)} = \left(c_1^{(2)} \quad c_2^{(2)} \quad \cdots \quad c_Q^{(2)}\right)^T$$

aufgrund der erfindungsgemäßen Ableitung vom selben Muttercode in 4, 8, ..., $2^m$ Kurzcodes jeweils mit einer Länge von $Q/2^m$ Chips, nämlich

$$\mathbf{c}_{Q/2^m}^{(1)} = \left(c_1^{(1)} \quad c_2^{(1)} \quad \cdots \quad c_{Q/2^m}^{(1)} \ 0 \quad \cdots \quad 0\right)^T,$$

$$\mathbf{c}_{Q/2^m}^{(2)} = \left(0 \quad \cdots \quad 0 \quad c_1^{(1)} c_2^{(1)} \quad \cdots \quad c_{Q/2^m}^{(1)} \ 0 \quad \cdots \quad 0\right)^T,$$

$$\cdots$$

$$\mathbf{c}_{Q/2^m}^{(2^m)} = \left(0 \quad \cdots \quad 0 \quad c_1^{(1)} c_2^{(1)} \quad \cdots \quad c_{Q/2^m}^{(1)}\right)^T$$

zerlegt:

$$c_Q^{(1)} = c_{Q/2^m}^{(1)} \pm c_{Q/2^m}^{(2)} \pm \cdots \pm c_{Q/2^m}^{(2^m)}$$

und

$$c_Q^{(2)} = c_{Q/2^m}^{(1)} \pm c_{Q/2^m}^{(2)} \pm \cdots \pm c_{Q/2^m}^{(2^m)} \quad .$$

Solange $Q/2^m > 1$ ist, lassen sich auf ähnliche Weise wie oben beschrieben Einsparungen in der Rechenkomplexität erzielen. Der aktuelle UTRA 1.28 Mcps TDD Standard benutzt für alle Zeitschlitze dieselbe Zuordnung der Mittambeln zu den Spreizcodes. Für die ersten vier Codes ergibt sich folgende Zuordnung:

Code c(1) - Mittambel m(1)
Code c(2) - Mittambel m(1)
Code c(3) - Mittambel m(2)
Code c(4) - Mittambel m(2)

Wenn die Zuordnung für den Signalisierungskanal BCH benutzt wird und wenn dieser Kanal über die Codes c(1) und c(2) auf der ersten Antenne übertragen werden soll - wie dies gegenwärtig gemäß 3GPP Specification TS25.221 version 4.1.0 [1] vorgesehen ist - und die Codes c(3) und c(4) über die Diversitätsantenne übertragen werden, kann die OVSF-Struktur nicht ausgenutzt werden, da der Code c(2) bereits für die erste Antenne benutzt wird.
Greift man jedoch auf die vorliegende Erfindung zurück, muss der Code für die Mittambelzuordnung ausgetauscht werden, da die Mittambel m(1) zur Schätzung des ersten Antennenpfades und die Mittambel m(2) zur Schätzung des zweiten Antennenpfades benutzt wird. Außerdem müssen die BCH-Codes für die erste Antenne (nicht Diversitätsantenne) verändert werden.
Dabei ergeben sich folgende beiden Möglichkeiten

Möglichkeit 1:

Code c(1) - Mittambel m(1)
Code c(2) - Mittambel m(2)
Code c(3) - Mittambel m(1)
Code c(4) - Mittambel m(2)

und
Möglichkeit 2:

Code c(1) - Mittambel m(1)
Code c(2) - Mittambel m(2)
Code c(3) - Mittambel m(2)
Code c(4) - Mittambel m(1)

Das Übertragungsschema für die Möglichkeit 2 ist in

Figur 1

dargestellt.
Der BCH wird in UTRA 1.28 Mcps TDD auf den beiden physikalischen Kanälen Primary Common Control Pyhsical Channels P-CCPCH1 und P-CCPCH2 übertragen; die auf diese beiden Kanäle gegebenen Signale werden gespreizt und unter Berücksichtigung der entsprechenden Mittambeln m$^{(1)}$ bzw. m$^{(2)}$ in den Multiplexern MUX verabeitet. Die gemultiplexten Signale werden auf die beiden Antennen TxAntenna 1 und TxAntenna 2 gegeben.

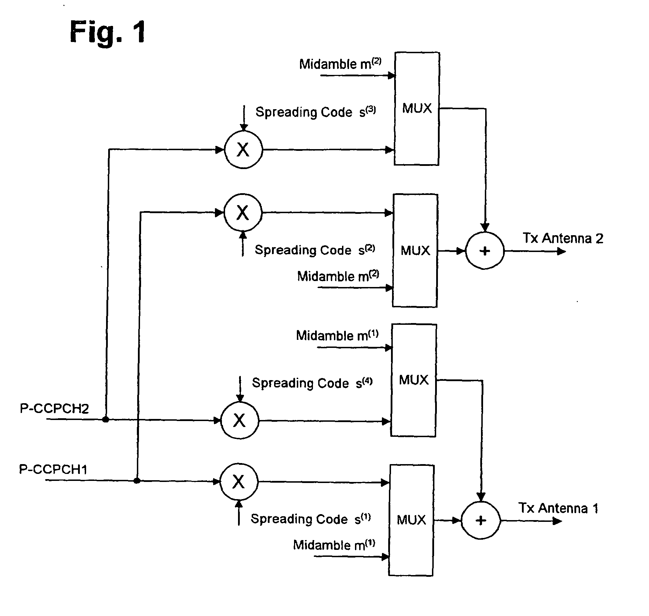

In Figur 1 ist das Spreizen mit den Spreizcodes anhand der Bezeichnungen Spreading Codes s$^{(1)}$, Spreading Codes s$^{(2)}$, Spreading Codes s$^{(3)}$ und Spreading Codes s$^{(4)}$ dargestellt, womit verdeutlicht werden soll, dass neben dem Spreizen mit dem Spreizcodes c$^{(1)}$, c$^{(2)}$, c$^{(3)}$ und c$^{(4)}$ in der Regel eine im Hinblick auf die Funkzelle spezifische Codierung (Scrambling) durchgeführt wird.

Aus den obigen Betrachtungen zeigt sich, dass das erfindungsgemäße Verfahren für Funk-Kommunikationssysteme geeignet ist, die mit einem symbol-synchronen CDMA arbeiten und die Symbole mit OVSF Codes gespreizt werden. Dies gilt in besonderem Maße für UTRA TDD Funk-Kommunikationssysteme.

Die Mehrwegeübertragung kann insbesondere über zwei Antennen über zwei physikalische Kanäle erfolgen. Diese Möglichkeit bietet sich gerade bei UTRA TDD Funk-Kommunikationssystemen an und zwar sowohl für den Modus der hohen Chiprate (high chip rate) als auch für den Modus der geringen Chiprate (low chip rate).

Nach einer speziellen Ausgestaltung der Erfindung erfolgt die Übertragung auf einem unidirektionalen Signalisierungskanal in Abwärtsrichtung, bevorzugt den Broadcast Channel (BCH).

**Patentansprüche**

1. Verfahren zur sendemehrwegeübertragung, Transmit Diversity, von identischen Daten über mehrere Antennen über $2^L$ physikalische Kanäle mit der natürlichen Zahl L in einem Funk-Kommunikationssystem mit mindestens jeweils einer über eine Funkschnittstelle miteinander verbundenen Basisstation und Teilnehmerstation, wobei:

   - die Übertragung mittels des CDMA-Vielfachzugriffsverfahrens erfolgt;
   - den physikalischen Kanälen orthogonale Codes mit variablen Spreizfaktoren der OVSF-Baumstruktur zugeordnet werden;

   **dadurch gekennzeichnet, dass**

   - den physikalischen Kanälen von demselben Muttercode abgeleitete Codes zugeordnet werden, wobei der Muttercode einen Spreizfaktor größer als 1 hat.

2. Verfahren nach Anspruch 1, **dadurch gekennzeichnet, dass** den physikalischen Kanälen $2^L$ parallele Codes des Spreizfaktors Q zugeordnet werden.

3. Verfahren nach Anspruch 1 oder 2, **dadurch gekennzeichnet, dass** jeder Code eine Länge Q aufweist und aus $2^L$ Kurzcodes der Länge $Q/2^L$ zusammengesetzt wird.

4. Verfahren nach einem der Ansprüche 1 bis 3, **dadurch gekennzeichnet, dass** das Funk-Kommunikationssystem auf dem TDD-Übertragungsverfahren beruht.

5. Verfahren nach einem der Ansprüche 1 bis 3, **dadurch gekennzeichnet, dass** das Funk-Kommunikationssystem auf dem FDD-Übertragungsverfahren beruht.

6. Verfahren nach einem der Ansprüche 1 bis 5, **dadurch gekennzeichnet, dass** die Mehrwegeübertragung über zwei Sendeantennen über zwei physikalische Kanäle erfolgt.

7. Verfahren nach einem der Ansprüche 1 bis 6, **dadurch gekennzeichnen, dass** die Übertragung auf einem unidirektionalen Signalisierungskanal in Abwärtsrichtung erfolgt.

8. Verfahren zum Mehrwegeempfang von identischen Daten an einer Teilnehmerstation von mehreren Antennen über $2^L$ physikalische Kanäle mit der natürlichen Zahl L in einem Funk-Kommunikationssystem von einer über eine Funkschnittstelle mit der Teilnehmerstation verbundenen Basisstation, wobei:

   - die Übertragung mittels des CDMA-Vielfachzugriffsverfahrens erfolgt; und
   - den physikalischen Kanälen $2^L$ parallele orthogonale von demselben Muttercode abgeleitete Codes des Spreizfaktors Q der CVSF-Baumstruktur zugeordnet sind, wobei der Muttercode einen Spreizfaktor größer als 1 hat und jeder Code eine Länge Q aufweist und aus $2^L$ Kurzcodes der Länge $Q/2^L$ zusammengesetzt ist;

   **dadurch gekennzeichnet, dass** bei der Dekodierung der Daten anstelle des jeweiligen Kanal-Codes der Länge Q die entsprechenden $2^L$ Kurzcodes der Länge $Q/2^L$ verwendet werden.

**EP 1 292 048 B1**

## Claims

**1.** Method for transmit diversity of identical data via a number of antennas via $2^L$ physical channels with the natural number L in a radio communication system having in each case at least one base station and subscriber station connected to one another via a radio interface, wherein:

- the transmission takes place by means of the CDMA multiple access method;
- orthogonal codes having variable spreading factors of the OVSF tree structure are allocated to the physical channels;

**characterized in that**

- codes derived from the same mother code are allocated to the physical channels, the mother code having a spreading factor of greater than 1.

**2.** Method according to Claim 1, **characterized in that** $2^L$ parallel codes of the spreading factor Q are allocated to the physical channels.

**3.** Method according to Claim 1 or 2, **characterized in that** each code has a length Q and is assembled from $2^L$ short codes of length $Q/2^L$.

**4.** Method according to one of Claims 1 to 3, **characterized in that** the radio communication system is based on the TDD transmission method.

**5.** Method according to one of Claims 1 to 3, **characterized in that** the radio communication system is based on the FDD transmission method.

**6.** Method according to one of Claims 1 to 5, **characterized in that** the transmit diversity takes place via two transmit antennas via two physical channels.

**7.** Method according to one of Claims 1 to 6, **characterized in that** the transmission is carried out on a unidirectional signalling channel on the downlink.

**8.** Method for receive diversity of identical data at a subscriber station from a number of antennas via $2^L$ physical channels with the natural number L in a radio communication system from a base station connected to the subscriber station via a radio interface, wherein:

- the transmission is carried out by means of the CDMA multiple access method; and
- $2^L$ parallel orthogonal codes derived from the same mother code, of spreading factor Q of the OVSF tree structure are allocated to the physical channels, wherein the mother code has a spreading factor of greater than 1 and each code has a length Q and is assembled from $2^L$ short codes of length $Q/2^L$;

**characterized in that** in the decoding of the data, the corresponding $2^L$ short codes of length $Q/2^L$ are used instead of the respective channel code of length Q.

## Revendications

**1.** Procédé de transmission par trajets multiples, Transmit Diversity, de données identiques par l'intermédiaire de plusieurs antennes via $2^L$ canaux physiques, L étant un nombre naturel, dans un système de radiocommunication comprenant au moins respectivement une station de base et une station d'abonné raccordées entre elles par l'intermédiaire d'une interface radio,

- la transmission étant réalisée au moyen du procédé d'accès multiple CDMA ;
- des codes orthogonaux comprenant des facteurs d'étalement variables de l'arbre OVSF étant affectés aux canaux physiques ;

**caractérisé en ce que**

10

- des codes dérivés du même code mère sont affectés aux canaux physiques, le code mère ayant un facteur d'étalement supérieur à 1.

2. Procédé selon la revendication 1, **caractérisé en ce que** des $2^L$ codes parallèles du facteur d'étalement Q sont affectés aux canaux physiques.

3. Procédé selon la revendication 1 ou 2, **caractérisé en ce que** chaque code présente une longueur Q et est composé de $2^L$ codes courts de la longueur $Q/2^L$.

4. Procédé selon l'une quelconque des revendications 1 à 3, **caractérisé en ce que** le système de radiocommunication repose sur le procédé de transmission TDD.

5. Procédé selon l'une quelconque des revendications 1 à 3, **caractérisé en ce que** le système de radiocommunication repose sur le procédé de transmission FDD.

6. Procédé selon l'une quelconque des revendications 1 à 5, **caractérisé en ce que** la transmission par trajets multiples est réalisée par l'intermédiaire de deux antennes Senoka via deux canaux physiques.

7. Procédé selon l'une quelconque des revendications 1 à 6, **caractérisé en ce que** la transmission est réalisée en sens descendant sur un canal de signalisation unidirectionnel.

8. Procédé pour la réception par trajets multiples de données identiques sur une station d'abonné par plusieurs antennes par l'intermédiaire $2^L$ de canaux physiques, L étant un nombre naturel, dans un système de radiocommunication par une station de base raccordée à la station d'abonné par l'intermédiaire d'une interface radio,

- la transmission étant réalisée au moyen du procédé d'accès multiple CDMA ; et
- $2^L$ codes orthogonaux parallèles, dérivés du même code mère, du facteur d'étalement Q de l'arbre OVSF étant affectés aux canaux physiques, le code mère ayant un facteur d'étalement supérieur à 1 et chaque code présentant une longueur Q et étant composé de $2^L$ codes courts de la longueur $Q/2^L$ ;

**caractérisé en ce que** lors du décodage des données, au lieu du code canal respectif de la longueur Q, on utilise les $2^L$ codes courts correspondants de longueur $Q/2^L$.

# Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5652764 A

**In der Beschreibung aufgeführte Nicht-Patentliteratur**

- **B. WALKE.** *Mobilfunknetze und ihre Protokolle,* vol. 1